# EUROPÄISCHE PATENTSCHRIFT

(11) **EP 0 623 771 B1**
(45) Veröffentlichungstag und Bekanntmachung des Hinweises auf die Patenterteilung: **01.07.1998**
(21) Anmeldenummer: 94850043.4
(22) Anmeldetag: 24.03.1994
(51) Int. Cl.: F16K 17/40, B67D 5/32, B67D 5/06

(54) **Unterbrechungsventil**
Shut-off valve
Soupape d'arrêt

(30) Priorität: 29.03.1993 DE 4310160
(43) Veröffentlichungstag der Anmeldung: 09.11.1994
(73) Patentinhaber: Persson, Osborn, S-310 41 Gullbrandstorp (SE)
(72) Erfinder: Andersson, Ulf, S-302 34 Halmstad (SE); Bardén, Lars, S-302 48 Halmstad (SE); Anders, Olson, S-302 38 Halmstad (SE)
(74) Vertreter: Nilsson, Lennart

(56) Entgegenhaltungen:
- EP-A- 0 610 986
- FR-A- 2 452 043
- US-A- 2 048 388
- US-A- 4 047 548
- US-A- 4 899 792
- US-A- 5 099 870
- US-A- 5 244 006

## Beschreibung

Die vorliegende Erfindung betrifft eine Vorrichtung entsprechend dem Oberbegriff des Anspruches 1.

An Tankstellenanlagen, namentlich öffentlichen (sogenannten Benzin-Tankstellen), ergibt sich ein immer größeres Problem durch Kunden, welche die Möglichkeit ausnützen, die Pistolenventile in ihrer Offenstellung zu verriegeln, so daß das Füllen des Tanks ohne unmittelbare Überwachung, sozusagen automatisch, erfolgen kann, und welche vergessen, das Pistolenventil auf dessen Platz auf oder bei der Pumpe zurückzustellen und mit dem weiterhin im Füllstutzen des Autotanks sitzenden Pistolenventil mit ihrem Fahrzeug wegfahren. Durch die darauf folgende Kraftbeanspruchung entsteht ein sehr großes Risiko, daß große Schäden entstehen, nicht nur am Pistolenventil, sondern ebenso ein vollständiger Schlauchbruch und große Schäden an der Pumpenanlage selbst. Außerdem können am Fahrzeug Schäden entstehen. Das zweifellos größte Problem besteht darin, daß große Mengen Benzin, Dieselöl usw. unkontrolliert in die Umgebung ausströmen können und nicht nur große Kosten verursachen, sondern auch ernsthafte Umweltschäden. In Anbetracht dessen, daß es sich oft um besonders leicht brennbare Flüssigkeiten handelt, besteht auch große Brandgefahr.

Vorrichtungen zur Eliminierung oder wenigstens zur wesentlichen Verminderung der oben genannten Problematik sind aus US-A-4 899 792 und FR-A-2 452 043 bekannt.

Aus dem Oberbegriffsmäßigen US-A-4 899 792 sind die Schrauben als eine Anzahl Sollbruchstellen bekannt und aus FR-A-2 452 043 ist eine Nut als Sollbruchstelle bekannt. Der vorliegenden Erfindung liegt die Aufgabe zugrunde eine Vorrichtung der eingangs genannten Art zu verbessern.

Diese Aufgabe wird gemäß der vorliegenden Erfindung dadurch gelöst, daß der einleitend angegebenen Vorrichtung die Kennzeichen des Anspruches 1 gegeben werden.

Durch eine Vorrichtung gemäß vorliegender Erfindung werden wenigstens zum hauptsächlichen Teil die bisherigen Probleme mit Schlauchbrüchen ausgeräumt, die beim Betanken von Fahrzeugen mittels mit Offenhaltesperren versehenen Pistolenventilen auftreten. Die Vorrichtung gemäß der Erfindung sieht eine erwünschte Position für einen eventuellen Bruch und außerdem ein Verschließen des Schlauches vor, nach und/oder in Zusammenhang mit dem Bruchzeitpunkt, so daß es nach dem Abtrennen von Teilen voneinander an den gewählten Stellen nicht zu einem unkontrollierten oder überhaupt unerwünschten Ausströmen von umweltgefährdenden Flüssigkeiten kommen kann.

Die erfindungsgemäße Vorrichtung ermöglicht auch eine beliebige Anordnung der Bruchstelle längs des Schlauches, wobei als der hierzu geeignetste Platz die unmittelbare Nähe des Pistolenventils oder der Bereich zwischen der Schlauchkupplung und der Pistolenkupplung erscheint. Weiterhin ermöglicht die erfindungsgemäße Vorrichtung eine einfache und günstige Anordnung eines Sichtglases, das in bestimmten Ländern gefordert wird.

Die vorliegende Erfindung wird im folgenden unter Hinweis auf die beiliegenden Zeichnungen an einem Beispiel beschrieben.
- Fig. 1: zeigt einen Schnitt durch einen Bereich einer Ausführungsform einer Vorrichtung gemäß der Erfindung, wobei sich die Teile in ihrer Stellung bei uneingebauter Vorrichtung befinden,
- Fig. 2: zeigt einen gleichen Schnitt wie Fig. 1 mit den Teilen in ihrer Stellung bei eingebauter Vorrichtung,
- Fig. 3: zeigt eine Seitenansicht eines Bestandteils der dargestellten Ausführungsform der Vorrichtung gemäß der Erfindung,
- Fig. 4: zeigt eine Draufsicht des Teiles in Fig. 3.

Die in den Zeichnungen dargestellte Ausführungsform einer erfindungsgemäßen Vorrichtung ist bestimmt und ausgebildet, um zwischen einem an und für sich konventionellen Schlauchende von in diesem Fall koaxialen Typ angeordnet zu werden, welches derartige Schlauchende einen zentralen Kanal für die Rückführung von Gas und einen den zentralen Kanal umgebenden und von diesem getrennten, ringförmigen Kanal für den Flüssigkeitsstrom aufweist.

Die gezeigte Ausführungsform der Vorrichtung gemäß der vorliegenden Erfindung besteht aus einem Ventilgehäuse 1 mit einem darin axial beweglichen Ventilkegel 2. Das Ventilgehäuse 1 hat einen Schlauchteil 3 und einen Pistolenventilteil 4. Die Teile 3 und 4 sind relativ zueinander längs einer zylindrischen Fläche 5 verschiebbar. Der Schlauchendeteil 3 weist einen inneren Hohlraum 6 auf mit einem Innengewinde 7 zum Zusammenwirken mit der Schlauchendenkupplung (nicht dargestellt). Der Pistolenventilteil 4 weist ein Außengewinde 8 auf zum Zusammenwirken mit einem entsprechenden Innengewinde in der Kupplung des Pistolenventils (nicht dargestellt). Das Gewinde 8 entspricht dem üblichen Schlauchendenkupplungs-Gewinde und das Innengewinde 7 entspricht den bekannten Innengewinden an einer Pistolenventilkupplung. Am inneren Ende des Gewindes 8 ist ein Dichtring 9 angeordnet.

Die zylindrische Fläche 5 bildet die ideelle Trennfläche zwischen einer inneren zylindrischen Fläche 10 in einem inneren Hohlraum in dem relativ zum inwendigen Hohlraum 6 entgegengesetzten Ende von Teil 3, und einer äußeren Oberfläche 11 auf dem relativ zum Gewinde 8 entgegengesetzten Ende von Teil 4. Die Oberfläche 11 weist eine Nut 12 für einen Dichtungsring 13 auf. Es ist offensichtlich, daß die Anzahl der Nuten 12 und die Anzahl der Dichtungsringe 13 größer sein kann als die dargestellte. Zwischen den Teilen 3 und 4 ist eine Anschlagschraube 14 angeordnet, welche einen Endstift 15 hat, welcher sich in eine Ausnehmung in der zylindrischen Oberfläche 11 erstreckt. Der Stift 15 erstreckt sich somit direkt durch die ideelle Fläche 5 und verhindert eine axiale Verschiebung zwischen den Teilen 3 und 4 relativ zueinander längs der ideellen zylindrischen Fläche 5. An dem relativ zum inneren Hohlraum entgegengesetzten Ende von Teil 3 ist am Teil 4 eine radiale Nut 16 angebracht, die sich rund um Teil 4 erstreckt und durch die Materialverminderung eine Sollbruchstelle in Teil 4 bildet.

Innen im Teil 3 ist ein konischer Ventilsitz 17 angebracht zum dichtenden Zusammenwirken mit einem Dichtungsring 18 in einer Dichtungsringnut 19 im Ventilkegel 2. Das freie Ende des Ventilkegels 2 hat im Prinzip das gleiche Aussehen wie das freie Ende einer an und für sich bekannten Schlauchendenkupplung und weist zwei Dichtungsringnuten 20 und 21 auf, jeweils mit ihrem Dichtungsring 22 bzw. 23. Am entgegengesetzten Ende des Ventilkegels 2 ist ein innerer Hohlraum 24 angeordnet, der den Gaskanal 25 erweitert und eine Druckfeder 26 enthält.

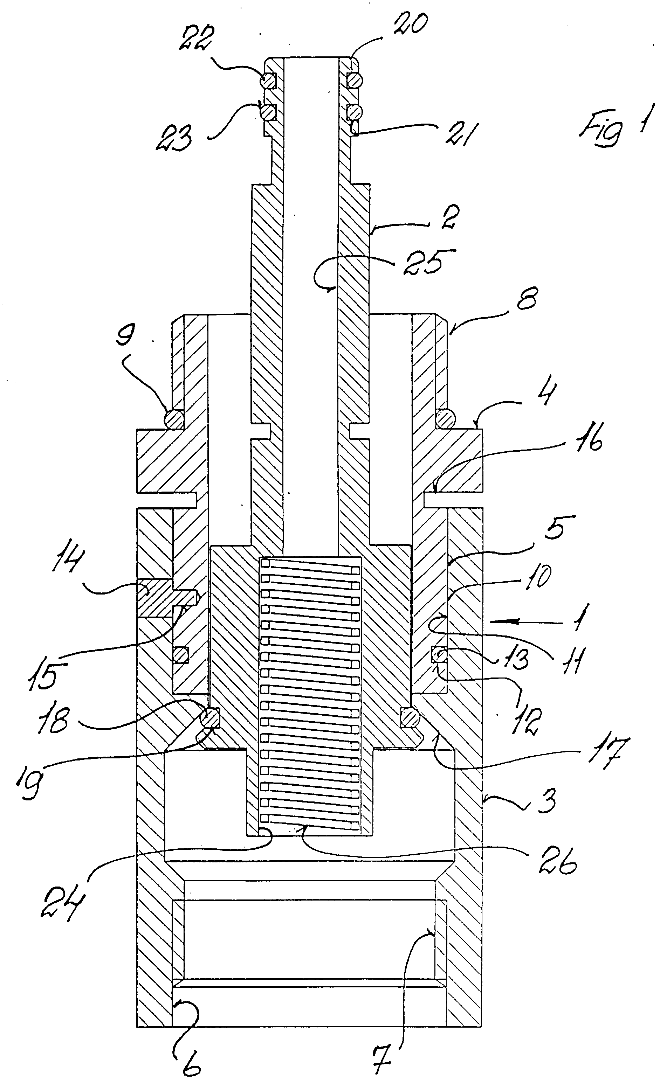

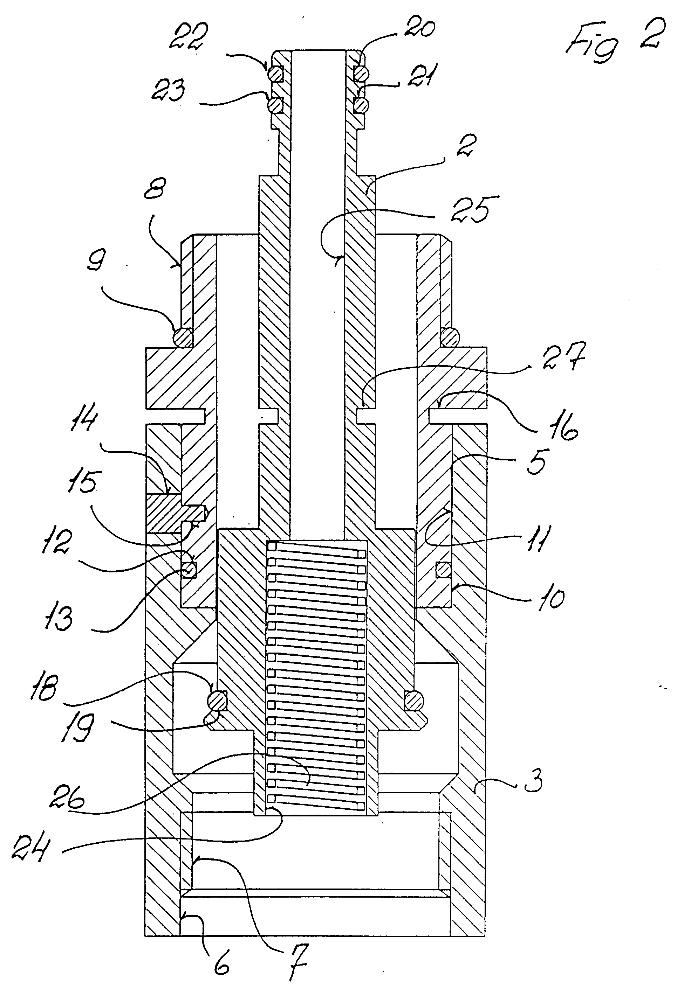

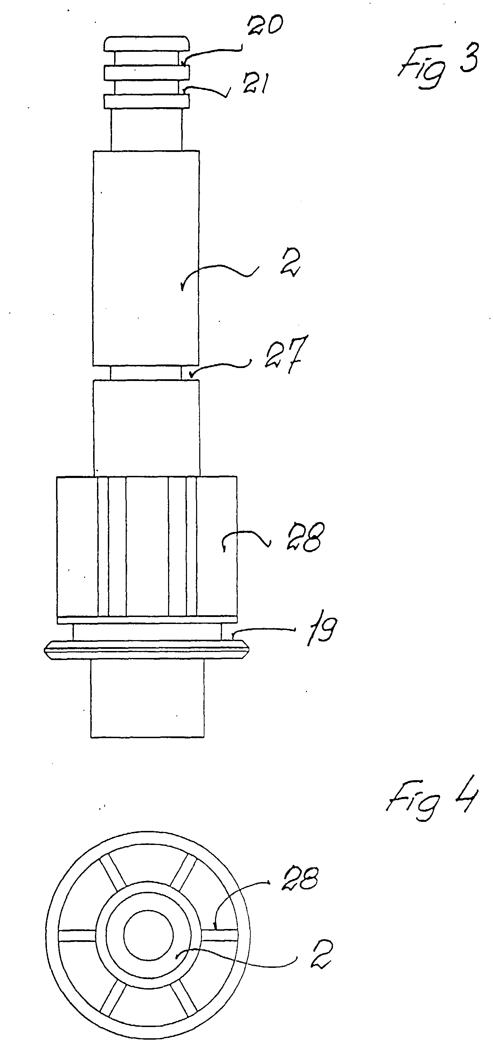

Beim Einbau einer Vorrichtung gemäß der vorliegenden Erfindung in eine Schlauchendenkupplung gelangt das relativ zum oberen Ende des Ventilkegels 2 entgegengesetzte Ende der Schlauchendenkupplung dazu, sich in den Hohlraum 24 zu erstrecken und den Ventilkegel 2 über die Feder 26 in die in Fig. 1 gezeigte Stellung zu pressen. Bei der folgenden Montage der Vorrichtung gemäß der Erfindung in eine Pistolenventilendenkupplung wird der Ventilkegel 2 in die in Fig. 2 gezeigte Lage zurückgedrückt, gegen die Kraft der Feder 26. Diese Stellung nimmt der Ventilkegel 2 während aller normalen Handhabung des Pistolenventils und des Schlauches ein. Der Ventilkegel 2 hat eine ringförmige, materialvermindernde Sollbruch-Ringnut 27, die bei der Lage der Vorrichtungs-Teile während normalem Betrieb auf gleichem Niveau mit der Ringnut 16 in Teil 4 liegt, wie aus Fig. 2 hervorgeht.

Es kann nützlich sein, die Ringnut 16 mit einem Gummiring, Plastikring oder dgl. auszufüllen, um das unbeabsichtigte Einführen eines Werkzeuges in die Nut zu vermeiden.

Der Ventilkegel 2 wird in Teil 4 mit Hilfe einer Anzahl radialer Flansche oder Flügel 28 geführt, die eine gewisse axiale Ausdehnung aufweisen und mit Winkelzwischenräumen oberhalb der Dichtungsringnut 19 angeordnet sind. Ist der Ventilkegel 2 in seiner in Fig. 2 dargestellten Lage, kann somit die Flüssigkeit in dem ringförmigen Kanal am Ventilkegel 2 im Zwischenraum zwischen den Flanschen oder Flügeln 28 vorbeiströmen. Wenn die erfindungsgemäße Vorrichtung einer übertriebenen, nicht erwünschten Belastung ausgesetzt wird, die beispielsweise auftreten kann beim Vergessen des Pistolenventils im Tankstutzen eines Fahrzeuges, das vom Platz bewegt wird, wird entweder der Stift 15 zum Abbrechen kommen und die Trennung der Teile 3 und 4 voneinander ermöglichen, oder es wird ein Bruch beim Boden der Nut 16 auftreten oder am Boden der Nut 27. Selbstverständlich gibt es Gelegenheiten, wo ein Bruch sowohl am Boden beider Nuten 16 und 27 und ein Abscheren des Stiftes 15 vorkommt. Unabhängig von dem Typ des Bruches wird der Ventilkegel 2 mittels der Feder 26 zum Eingriff mit dem Ventilsitz 17 gepreßt. In diesem Fall wird der Ausstrom von Flüssigkeit aus dem Schlauchende effektiv verhindert und das Risiko für weitere Schäden am Schlauch und der Pumpenanlage beträchtlich begrenzt.

Das Ventilgehäuse 1 nach der vorliegenden Erfindung kann auf einfache Weise mit einem Sichtglas versehen werden, beispielsweise in der Wand zwischen dem Ventilsitz 17 und dem Gewinde 7. Ein großer Vorteil beim Plazieren der erfindungsgemäßen Vorrichtung nahe dem Pistolengriffventil besteht darin, daß keine Anpassungen erforderlich sind im Fall, daß der Schlauch in oder auf einem Schlauchgruppen-Roller von manuellem oder automatischem Typ angeordnet ist. Des weiteren ist es von großem Vorteil, daß es für das Anbringen der erfindungsgemäßen Vorrichtung nicht erforderlich ist, irgendwelche Änderungen an an und für sich bekannten Kupplungen zwischen Schlauchenden und Pistolengriffventilen vorzunehmen; vielmehr kann die Vorrichtung gemäß der Erfindung, wie aus den vorstehenden Beschreibungen hervorgeht, direkt zwischen die Schlauchendenkupplung und die Kupplung des Pistolengriffventils eingesetzt werden.

Viele Modifizierungen der im Vorstehenden beschriebenen Ausführungsform der vorliegenden Erfindung sind im Rahmen des in den Patentansprüchen definierten Erfindungsgedankens natürlich möglich.

## Patentansprüche

1. Vorrichtung für das Verursachen einer Bruchstelle in oder bei einem Schlauch, z.B. einem Schlauch an Tankstellen, der an einem Ende mit einem Pistolenventil mit Offenhaltesperre versehen werden kann, und zum Verhindern von Ausfluß aus der Bruchstelle, wobei die Bruchstelle in einem Ventilgehäuse (1) angeordnet ist mit einem Ventilkegel (2) und einem damit zusammenwirkenden Ventilsitz (17), und daß die Bruchstelle eine Anzahl Sollbruchstellen (15, 16, 27) aufweist, so daß bei einer vorgegebenen Beanspruchung ein Bruch auf solche Art entsteht, daß der Ventilkegel (2) dichtend am Ventilsitz (17) angreift, und wobei das Ventilgehäuse (1) zwei relativ zueinander axial verschiebliche und voneinander trennbare Teile (3, 4) aufweist, zwischen denen eine Sperre (15) angeordnet ist, die ausgebildet ist, bei einer vorgegebenen Beanspruchung zu brechen, **dadurch gekennzeichnet** daß eine radiale, materialverringernde Sollbruch-Nut (16, 27) sowohl im Ventilgehäuse (1) als auch im Ventilkegel (2) angebracht ist, und zwar bei der normalen Betriebslage der Teile gerade aufgleichen Niveau voneinander und
daß die Nut (16) im Ventilgehäuse (1) am Ende des die axiale Verschiebung ermöglichenden Bereiches (5) angebracht ist.

2. Vorrichtung nach Anspruch 1, **dadurch gekennzeichnet,** daß das Ventilgehäuse (1) am freien Ende des Schlauches angeordnet ist.

3. Vorrichtung nach Anspruch 1, **dadurch gekennzeichnet**, daß die Sperre (15) aus einem Stift besteht, der sich radial zwischen den axial verschieblichen Teilen (3, 4) erstreckt, und der beim Auftreten der vorgegebenen Beanspruchung abgesichert wird.

4. Vorrichtung nach Anspruch 3, **dadurch gekennzeichnet**, daß der Stift (15) am Ende einer Anschlagschraube angebracht ist.

5. Vorrichtung nach Anspruch 1, **dadurch gekennzeichnet**, daß der Ventilsitz (17) in dem im Schlauch festen Teil (3) des Ventilgehäuses (1) gelegen ist, während der andere Teil (4) des Ventilgehäuses (1) außerhalb der Sollbruchstellen-Nut (16) liegt.

6. Vorrichtung nach Anspruch 1 und/oder 5, **dadurch gekennzeichnet,** daß der Ventilkegel (2) gegen den Ventilsitz (17) federbelastet ist.

## Claims

1. Device for causing a rupture point in or at a hose, for instance a hose at filling stations, which can be equipped at one end with a pistol valve with an interlock device to hold it open and to prevent outflow from the rupture point, whereby the rupture point is arranged in a valve chamber (1) with a valve cone (2) and a valve seat (17) interacting with it, and the rupture point exhibits a number of predetermined rupture points (15, 16, 27), so that, in the presence of a given loading, a rupture takes place of such a kind that the valve cone (2) engages with the valve seat (17) in a sealing fashion, and whereby the valve chamber (1) exhibits two parts (3, 4) capable of sliding axially relative to one another and of being separated from one another, between which a locking means (15) is arranged that is so executed as to break at a given stress loading, **characterised in that** a radial, material-reducing predetermined rupture groove (16, 27) is arranged both in the valve chamber (1) and in the valve cone (2) and, in fact, with the parts in their normal operating position precisely at the same level with one another, and in that the groove (16) in the valve chamber (1) is arranged at the end of the area (5) that permits the axial displacement.

2. Device in accordance with Claim 1, **characterised in that** the valve chamber (1) is arranged at the free end of the hose.

3. Device in accordance with Claim 1, **characterised in that** the locking means (15) consists of a pin that extends radially between the parts (3, 4) that are capable of axial displacement and is protected in the presence of the predetermined loading.

4. Device in accordance with Claim 3, **characterised in that** the pin (15) is attached at the end of a stop screw.

5. Device in accordance with Claim 1, **characterised in that** the valve seat (17) lies in the fixed part (3) of the valve chamber (1) in the hose, whereas the other part (4) of the valve chamber (1) lies outside the predetermined rupture point groove (16).

6. Device in accordance with Claims 1 and/or 5, **characterised in that** the valve cone (2) is spring-loaded against the valve seat (17).

## Revendications

1. Dispositif devant provoquer un point de rupture dans un tuyau ou à côté d'un tuyau, par exemple un tuyau dans une station-service qui peut être muni en une extrémité d'une soupape à poignée pistolet à verrouillage en position ouverte et devant éviter un écoulement au point de rupture, où le point de rupture est situé dans une boîte à soupape (1) comportant un cône de soupape (2) et un siège de soupape (17) en collaboration avec celui-ci, le point de rupture comportant une quantité de points devant rompre (15, 16, 27), de sorte qu'une sollicitation prédéterminée provoque une rupture telle que le cône de soupape (2) se plaque de façon étanche contre le siège de soupape (17), et où la boîte à soupape (1) présente deux parties (3, 4) séparables et axialement coulissables l'une par rapport à l'autre, entre lesquelles est placée une butée (15) qui est conçue pour rompre sous l'effet d'une sollicitation prédéterminée, **caractérisé en ce que** une rainure de rupture radiale réduite en matériel (16, 27) soit prévue tant dans la boîte à soupape (1) que dans le cône de soupape (2) et en l'occurrence qu'elle soit alignée au même niveau pour un fonctionnement normal des éléments et en ce que la rainure (16) dans la boîte à soupape (1) soit placée à l'extrémité de la zone (5) permettant le coulissement axial.

2. Dispositif selon la revendication 1, **caractérisé en ce que** la boîte à soupape (1) soit placée à l'extrémité libre du tuyau.

3. Dispositif selon la revendication 1, **caractérisé en ce que** la butée (15) se compose d'une pointe de prolongement radial entre les parties de coulissement axial (3, 4) et que la rupture en soit assurée à l'apparition de la sollicitation prédéterminée.

4. Dispositif selon la revendication 3, **caractérisé en ce que** la pointe (15) soit placée en bout d'une vis de butée.

5. Dispositif selon la revendication 1, **caractérisé en ce que** le siège de soupape (17) soit posé dans la partie (3) de la boîte à soupape (1) fixée dans le tuyau, tandis que l'autre partie (4) de la boite à soupape (1) est placée hors de la rainure du point de rupture (16).

6. Dispositif selon la revendication 1 et/ou 5, **caractérisé en ce que** le cône de soupape (2) soit poussé par ressort contre le siège de soupape (17).
